# EUROPÄISCHE PATENTSCHRIFT

(11) **EP 1 438 221 B1**
(45) Veröffentlichungstag und Bekanntmachung des Hinweises auf die Patenterteilung: **28.12.2005**
(21) Anmeldenummer: 02772393.1
(22) Anmeldetag: 23.10.2002
(51) Int. Cl.: B60T 13/74, B60T 17/22

(54) **SCHEIBENBREMSE MIT ERKENNUNG DES ANLEGENS DER REIBBELÄGE AN DIE BREMSSCHEIBE**
DISC BRAKE WITH RECOGNITION OF THE COMING INTO CONTACT OF FRICTION LININGS WITH THE BRAKE DISC
FREIN A DISQUE ET RECONNAISSANCE DE L'ENTREE EN CONTACT DES GARNITURES DE FRICTION AVEC LE DISQUE DE FREIN

(30) Priorität: 24.10.2001 DE 10152423
(43) Veröffentlichungstag der Anmeldung: 21.07.2004
(73) Patentinhaber: Lucas Automotive GmbH, 56070 Koblenz (DE)
(72) Erfinder: GILLES, Leo, 56077 Koblenz (DE)
(74) Vertreter: Röthinger, Rainer
(86) Internationale Anmeldenummer: PCT/EP2002/011859
(87) Internationale Veröffentlichungsnummer: WO 2003/035445

(56) Entgegenhaltungen:
- EP-A- 0 509 225
- EP-A- 1 186 495
- WO-A-99/05011
- DE-A- 4 424 270
- DE-A- 19 536 695
- DE-A- 19 730 094

## Beschreibung

Die Erfindung betrifft eine Scheibenbremse mit zwei zur Erzeugung einer Klemmkraft beidseits an eine Bremsscheibe anpressbaren Bremsbacken und einer Aktuatoreinrichtung zur Betätigung mindestens einer der Bremsbacken. Die Erfindung betrifft weiterhin ein Verfahren zum Steuern oder Regeln einer eine derartige Scheibenbremse umfassenden Bremsanlage.

Eine Scheibenbremse der genannten Art ist aus der WO 99/05011 bekannt. Die bei dieser Scheibenbremse im Rahmen eines Bremsvorgangs auftretenden Kräfte lassen sich in Klemmkraft (auch Axialkraft, Querkraft, Zuspannkraft oder Normalkraft genannt) und Umfangskraft (auch Reibkraft genannt) unterteilen. Als Klemmkraft wird diejenige Kraftkomponente bezeichnet, welche von einer Bremsbacke senkrecht zur Ebene der Bremsscheibe in die Bremsscheibe eingeleitet wird. Unter der Umfangskraft hingegen versteht man diejenige Kraftkomponente, welche aufgrund der Bremsreibung zwischen einem Reibbelag der Bremsbacke und der Bremsscheibe in Umfangsrichtung der Bremsscheibe auf die Bremsbacke wirkt. Durch Multiplikation der Umfangskraft mit dem Abstand des Angriffspunkts der Umfangskraft von der Drehachse der Räder lässt sich das Bremsmoment ermitteln.

Bei der aus der WO 99/05011 bekannten Scheibenbremse wird die Klemmkraft entweder hydraulisch oder mittels eines Elektromotors erzeugt. Im Falle einer hydraulischen Klemmkrafterzeugung wird ein unter Druck gesetztes Hydraulikfluid in eine in einem Gehäuse der Scheibenbremse ausgebildete Hydraulikkammer eingeleitet. Ein in der Hydraulikkammer verschieblich aufgenommener Hohlkolben einer Aktuatoreinrichtung wird von dem Hydraulikfluid in Richtung auf eine der beiden Bremsbacken bewegt und bringt diese in Reibungseingriff mit der Bremsscheibe. Da die Scheibenbremse als Schwimmsattel-Scheibenbremse ausgestaltet ist, wird in bekannter Weise auch die nicht unmittelbar mit dem Kolben zusammenwirkende Bremsbacke gegen die Bremsscheibe gepresst.

Bei einer motorischen Klemmkrafterzeugung wird die Rotationsbewegung einer Motorwelle zunächst mittels eines Planetengetriebes untersetzt und anschließend mittels einer innerhalb des Hohlkolbens angeordneten Mutter-Spindel-Anordnung der Aktuatoreinrichtung in eine Translationsbewegung umgesetzt. Der Hohlkolben wird von dieser Translationsbewegung erfasst und überträgt die Translationsbewegung auf eine der beiden Bremsbacken, welche daraufhin gegen die Bremsscheibe gepresst wird.

Zukünftige Bremsanlagen erfordern für Steuer- und Regelzwecke eine exakte Erfassung der bei einem Bremsvorgang auftretenden Kräfte. Es ist daher üblich, Scheibenbremsen mit einem oder mehreren Kraftsensoren zu bestücken und diese Kraftsensoren mit Steuer- und Regelschaltkreisen zu koppeln.

In der WO 99/05011 wird angeregt, die Steuerung der Scheibenbremse dadurch zu verbessern, dass ein die Klemmkraft erfassender Kraftsensor vorgesehen wird, der beispielsweise in oder an einer Bremsbacke oder auch im Hohlkolben angeordnet sein kann. Mittels eines derartigen Kraftsensors kann die Klemmkraft über einen weiten Klemmkraftbereich erfasst und ein geeignetes Steuersignal generiert werden.

In der DE 196 39 686 A1 wird ebenfalls eine mit Kraftsensoren bestückte Scheibenbremse beschrieben. Die Scheibenbremse besitzt zwei Kraftsensoren, welche an je einer Befestigungsschraube angeordnet sind, mittels derer ein Bremssattel mit einem fahrzeugfesten Halter verbunden ist. Die Kraftsensoren dienen zur Erfassung der Umfangskraft, welche von einer Steuereinrichtung eines nicht näher beschriebenen, elektromechanischen Radbremsaktors beim Einstellen der Klemmkraft berücksichtigt wird.

Aus der DE 195 36 695 A1 ist ein System zum Steuern oder Regeln einer elektromechanischen Bremse bekannt. Bei diesem System ist ein Mechanismus vorgesehen, um auch ohne Einsatz eines Kraftsensors ein Lüftspiel der Bremse einzustellen.

Der Erfindung liegt die Aufgabe zugrunde, eine Scheibenbremse anzugeben, welche einen insbesondere im Hinblick auf Steuer- und Regelzwecke optimierten Aufbau besitzt.

Diese Aufgabe wird ausgehend von einer Scheibenbremse der eingangs genannten Art erfindungsgemäß dadurch gelöst, dass eine Erfassungseinrichtung zum Erfassen des in Anlage Gelangens mindestens einer der Bremsbacken an die Bremsscheibe vorhanden ist, wobei die Erfassungseinrichtung beim in Anlage Gelangen einen charakteristischen Zustand annimmt und ein elastisches Element umfasst, wobei der charakteristische Zustand bei Erreichen einer durch die elastischen Eigenschaften des elastischen Elements definierten Kraftschwelle angenommen wird.

Im Gegensatz zu herkömmlichen Kraftsensoren nimmt die erfindungsgemäße Erfassungseinrichtung beim in Anlage Gelangen keinen undefinierten Zustand innerhalb eines Kontinuums an, sondern einen charakteristischen, d.h. klar definierten Zustand aus vorzugsweise einer Mehrzahl diskreter und voneinander abgegrenzter Zustände. So ist es beispielsweise möglich, dass die Erfassungseinrichtung beim in Anlage Gelangen mindestens einer der Bremsbacken an die Bremsscheibe einen charakteristischen von zwei möglichen Zuständen aus einer digitalen Zustandsmenge (z.B. ein/aus) annimmt.

Die Erfassungseinrichtung kann als aktive oder passive Einrichtung ausgestaltet sein. So ist es denkbar, dass eine aktive Erfassungseinrichtung beim in Anlage Gelangen ein diskretes elektrisches Zustandssignal generiert. Eine passive Erfassungseinrichtung kann beim in Anlage Gelangen in einen diskreten mechanischen, vorzugsweise elektrisch auswertbaren Zustand versetzt werden. Der charakteristische Zustand kann daher sowohl mechanischer als auch elektrischer Natur sein.

Vorzugsweise verharrt die Erfassungseinrichtung während des gesamten Bremsvorgangs in dem für das in Anlage Gelangen mindestens einer der Bremsbacken an die Bremsscheibe charakteristischen Zustand. Dieser charakteristische Zustand ist dann nicht nur ein Indiz für den Vorgang des in Anlage Gelangens, sondern zusätzlich für den Zustand des sich in Anlage Befindens.

Die vorhergehenden Ausführungen machen deutlich, dass unter Verwendung der erfindungsgemäßen Erfassungseinrichtung ein diskretes Signal zum Steuern oder Regeln einer Bremsanlage generierbar ist, welches charakteristisch für das in Anlage Gelangen mindestens einer der Bremsbacken an die Bremsscheibe ist. Ein derartiges diskretes Signal ist von Steuer- oder Regelalgorithmen wesentlich einfacher auswertbar als beispielsweise ein kontinuierliches Ausgangssignal eines herkömmlichen Kraftsensors.

In vielen Einsatzbereichen kann die erfindungsgemäße Erfassungseinrichtung die bislang verwendeten, komplexen und daher teueren Kraftsensoren ersetzen. So ist es bei einer motorbetätigbaren Scheibenbremse denkbar, die erfindungsgemäße Erfassungseinrichtung zur sicheren Erkennung des in Anlage Gelangens mindestens einer der Bremsbacken an die Bremsscheibe zu verwenden und eine Regelung z.B. der Klemm- oder Umfangskraft nach dem Erfassen des in Anlage Gelangens sensorlos durch Auswerten der Motorstromaufnahme oder des Verdrehwinkels eines Rotors des Motors durchzuführen. Es kann jedoch auch daran gedacht werden, die erfindungsgemäße Erfassungseinrichtung in Kombination mit einem oder mehreren herkömmlichen Kraftsensoren, beispielsweise Klemmkraftsensoren oder Umfangskraftsensoren, einzusetzen.

Vorzugsweise nimmt die Erfassungseinrichtung den für das in Anlage Gelangen charakteristischen Zustand bei Erreichen einer vordefinierten Klemmkraft- oder Umfangskraftschwelle an. Da das in Anlage Gelangen mindestens einer der Bremsbacken an die Bremsscheibe ein kontinuierlicher Vorgang ist, gestattet eine derartige Vorhergehensweise eine definierte Festlegung, ab wann von einem für Steuer- oder Regelzwecke beachtlichen in Anlage Gelangen auszugehen ist. Da der Vorgang des in Anlage Gelangens erfasst werden soll, wird die maßgebliche Kraftschwelle zweckmäßigerweise vergleichsweise niedrig gewählt. Als vorteilhaft hat sich herausgestellt, die Kraftschwelle unterhalb von ungefähr 100 N zu wählen. Sinnvollerweise liegt die Kraftschwelle im Bereich zwischen 50 und 90 N und vorzugsweise bei ungefähr 80 N.

Die Erfassungseinrichtung kann ein funktionell zwischen mindestens einer der Bremsbacken und der Aktuatoreinrichtung angeordnetes elastisches Element umfassen, dessen elastische Eigenschaften die Klemmkraftschwelle festlegen. Zweckmäßigerweise befindet sich das elastische Element bereits vor Beginn eines Bremsvorgangs in einem vorgespannten Zustand. Das elastische Element kann beispielsweise von einer Schraubenfeder oder Formfeder gebildet sein oder aus einem Elastomermaterial bestehen. Gemäß einer bevorzugten Ausgestaltung der Erfindung ist das elastische Element innerhalb eines Käfigs angeordnet, der starr mit der Aktuatoreinrichtung gekoppelt ist und innerhalb dessen mindestens eine der Bremsbacken relativ zur Aktuatoreinrichtung begrenzt verschieblich ist. Der Käfig kann außerdem als Führung für die mindestens eine darin aufgenommene Bremsbacke fungieren.

Für die Erfassungseinrichtung stehen unterschiedliche Realisierungsmöglichkeiten zur Verfügung. Allen Realisierungsmöglichkeiten gemeinsam ist der funktionelle Aspekt, dass die Erfassungseinrichtung einen für Steuer- und Regelzwecke auswertbaren Zustand annimmt, sobald mindestens eine der Bremsbacken in Anlage an die Bremsscheibe gelangt. So kann beispielsweise daran gedacht werden, die Erfassungseinrichtung als Schalteinrichtung auszubilden. Die Funktionsweise der Schalteinrichtung kann auf einem mechanischen oder einem elektrischen Schaltprinzip beruhen. Ein Beispiel für ein mechanisches Schaltprinzip ist die Bewegung von Schaltmitteln als Reaktion auf das in Anlage Gelangen mindestens einer der Bremsbacken an die Bremsscheibe. Ein elektrisches Schaltprinzip kann auf dem Hall-Effekt basieren.

Eine bevorzugte Ausführungsform einer auf einem mechanischen Schaltprinzip beruhenden Schalteinrichtung besitzt mindestens ein Kontaktpaar mit einem ersten Kontakt und einem zweiten Kontakt, wobei die beiden Kontakte derart ausgestaltet sind, dass sie beim in Anlage Gelangen mindestens einer der Bremsbacken an die Bremsscheibe relativ zueinander einen charakteristischen Schaltzustand annehmen. Dieser für das in Anlage Gelangen charakteristische Schaltzustand kann in einem Öffnen oder in einem Schließen eines Stromkreises bestehen. Der mit einem Öffnen eines elektrischen Schaltkreises einhergehende charakteristische Schaltzustand ist besonders vorteilhaft, da in diesem Fall eine mechanische Entkopplung des Kontaktpaars von den bei einem Bremsvorgang auftretenden Rückwirkkräften einhergehen kann.

Zweckmäßigerweise ist das elastische Element funktionell zwischen dem ersten Kontakt und dem zweiten Kontakt angeordnet. Auf diese Weise kann beispielsweise erreicht werden, dass die Kontakte den charakteristischen Schaltzustand erst nach einer Kompression des elastischen Elements, d.h. nach Überschreiten der Klemmkraftschwelle, annehmen. Als vorteilhaft hat sich herausgestellt, den einen Kontakt mit mindestens einer der Bremsbacken und den mit diesem Kontakt zusammenwirkenden anderen Kontakt mit der Aktuatoreinrichtung zu koppeln. Der letztgenannte Kontakt kann mit einem translatorisch beweglichen Element der Aktuatoreinrichtung derart gekoppelt sein, dass das Öffnen oder Schließen des elektrischen Stromkreises von einer Bewegung der Aktuatoreinrichtung induziert wird.

Was die Ausgestaltung der Aktuatoreinrichtung anbelangt, stehen unterschiedliche Konzepte zur Verfügung. Die Aktuatoreinrichtung kann motorisch oder hydraulisch betätigbar sein. Außerdem ist es möglich, ein und dieselbe Aktuatoreinrichtung sowohl hydraulisch als auch motorisch betätigbar auszugestalten. Bei einer derartigen Ausgestaltung der Aktuatoreinrichtung kann mittels der motorischen Betätigung eine Not- oder Parkbremsfunktion realisiert werden. Gemäß einer bevorzugten Ausgestaltung der Erfindung ist die Scheibenbremse Teil einer elektrohydraulischen Bremsanlage.

Zweckmäßigerweise ist das bereits erwähnte translatorisch bewegliche Aktuatorelement der Aktuatoreinrichtung je nach Ausgestaltung der Aktuatoreinrichtung zusätzlich noch in eine Rotationsbewegung versetzbar. Sofern die Aktuatoreinrichtung eine Mutter-Spindel-Anordnung umfasst, kann das translatorisch bewegliche Aktuatorelement entweder von der Mutter oder von der Spindel der Mutter-Spindel-Anordnung gebildet sein. Das translatorisch bewegliche Aktuatorelement könnte jedoch auch eine separate Komponente sein, welche mit der Mutter oder der Spindel der Mutter-Spindel-Anordnung koppelbar ausgestaltet sein kann. So kann das translatorisch bewegliche Aktuatorelement beispielsweise von einem mit einer der Bremsbacken zusammenwirkenden Kolben gebildet sein, welcher die Mutter-Spindel-Anordnung radial außen umgibt. Im Falle einer hydraulisch betätigbaren Aktuatoreinrichtung kann das translatorisch bewegliche Aktuatorelement von einem von dem Hydraulikfluid angetriebenen Kolben gebildet sein.

Ein Ausführungsbeispiel einer erfindungsgemäßen Scheibenbremse wird nachfolgend unter Bezugnahme auf die beigefügten, schematischen Zeichnungen näher erläutert. Es zeigt:
- Figur 1: eine Schnittansicht eines Teils eines ersten Ausführungsbeispiels einer erfindungsgemäßen Scheibenbremse;
- Figur 2: eine graphische Darstellung der Abhängigkeit der Klemmkraft von dem Zuspannweg der Aktuatoreinrichtung; und
- Figur 3: eine Schnittansicht gemäß Fig. 1 eines Teils eines zweiten Ausführungsbeispiels einer erfindungsgemäßen Scheibenbremse.

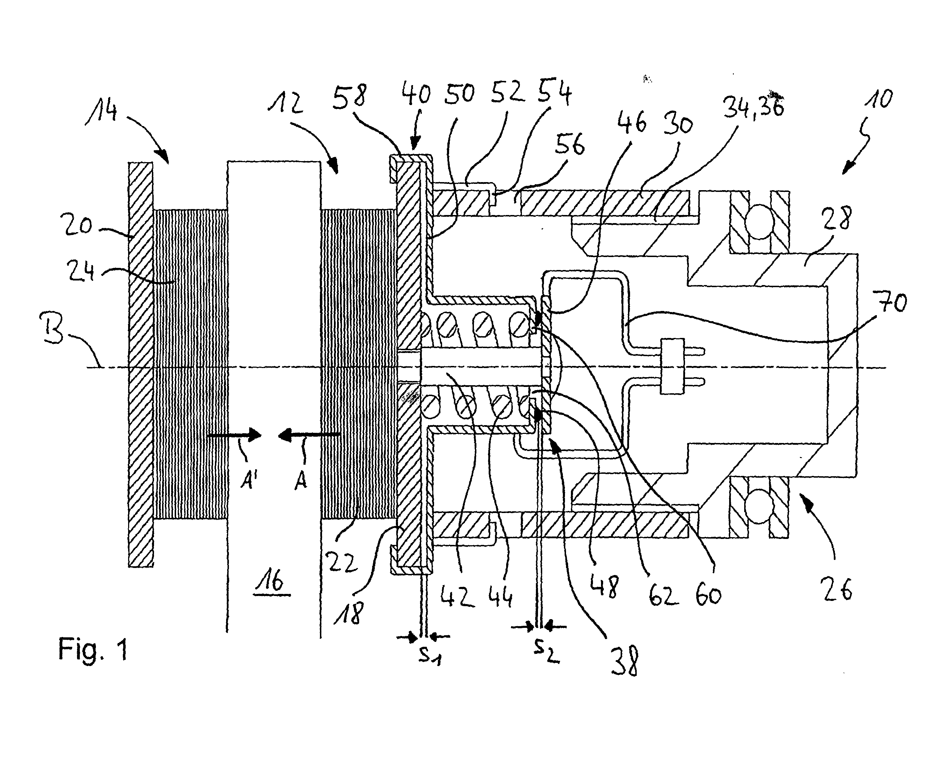

In Fig. 1 sind die maßgeblichen Komponenten einer Schwimmsattel-Scheibenbremse 10 gemäß einem ersten Ausführungsbeispiel der Erfindung dargestellt. Die Scheibenbremse 10 umfasst zwei Bremsbacken 12, 14, welche beidseits an eine Bremsscheibe 16 anpressbar sind. Jede der beiden Bremsbacken 12, 14 besitzt eine Trägerplatte 18, 20 und einen auf der Trägerplatte 18, 20 angeordneten Reibbelag 22, 24. Mittels des jeweiligen Reibbelags 22, 24 wirken die beiden Bremsbacken 12, 14 mit der Bremsscheibe 16 zusammen. Während des Zusammenwirkens der Bremsbacken 12, 14 mit der Bremsscheibe 16 wird eine entlang der Pfeile A, A' wirkende Klemmkraft erzeugt.

Zur Erzeugung der Klemmkraft ist ein in Fig. 1 nicht dargestellter Elektromotor vorgesehen, welcher in bekannter Weise mit einem in Fig. 1 nicht dargestellten Untersetzungsgetriebe zusammenwirkt. Eine Ausgangsseite des Untersetzungsgetriebes ist mit einer Aktuatoreinrichtung 26 verbunden. Die Aktuatoreinrichtung 26 setzt eine Rotationsbewegung des Elektromotors in eine Translationsbewegung zur translatorischen Betätigung der Bremsbacken 12, 14 um.

Im Ausführungsbeispiel gemäß Fig. 1 ist die Aktuatoreinrichtung 26 eine Mutter-Spindel-Anordnung, welche eine rotatorisch bewegliche, becherförmige Spindel 28 sowie eine koaxial zur Spindel 28 und radial außen bezüglich der Spindel 28 angeordnete Mutter 30 in Gestalt eines hohlzylindrischen Kolbens umfasst.

Die Aktuatoreinrichtung 26 ist derart ausgebildet, dass eine Rotationsbewegung der Spindel 28 um eine Längsachse B der Scheibenbremse 10 in einer Translationsbewegung der Mutter 30 entlang dieser Längsachse B umgesetzt wird. Zu diesem Zweck ist die becherförmige Spindel 28 mit einem Außengewinde 34 versehen, welches mit einem komplementären Innengewinde 36 der Mutter 30 zusammenwirkt. Die Mutter 30 ist innerhalb eines in Fig. 1 nicht dargestellten Gehäuses der Scheibenbremse 10 drehfest gelagert.

Die Spindel 28 kann auf unterschiedliche Art und Weise, beispielsweise mittels einer Bodenverzahnung, mit dem in Fig. 1 nicht dargestellten Untersetzungsgetriebe gekoppelt sein. Im Falle einer Bogenverzahnung besteht nicht nur eine drehfeste Verbindung zwischen Spindel 28 und Untersetzungsgetriebe, sondern die Spindel 28 ist um die Längsachse B in einem bestimmten Winkelbereich bewegbar. Während der Rotationsbewegung der Spindel 28 auftretende Querkräfte lassen sich auf diese Weise zuverlässig kompensieren.

Die Scheibenbremse 10 besitzt eine als Schalteinrichtung ausgebildete Erfassungseinrichtung 38, welche beim in Anlage Gelangen der Bremsbacken 12, 14 an die Bremsscheibe 16 einen für dieses in Anlage Gelangen charakteristischen Schaltzustand einnimmt. Die Erfassungseinrichtung 38 setzt sich aus einem starr mit der Mutter 30 gekoppelten Käfig 40, einem teilweise innerhalb des Käfigs 40 angeordneten, kolbenartigen Fortsatz 42 der Trägerplatte 18, einem elastischen Element in Gestalt einer den Fortsatz 42 radial außen umgebenden Schraubenfeder 44 sowie einem Kontaktpaar 46, 48 zusammen.

Der Käfig 40 besitzt eine kreisringförmige Trägerscheibe 50, welche in der in Fig. 1 dargestellten Ausgangsstellung der Aktuatoreinrichtung 26 flächig an den der Bremsscheibe 16 zugewandten Stirnseiten der Spindel 28 und der Mutter 30 anliegt. Auf einer der Bremsscheibe 16 abgewandten Oberfläche der Trägerscheibe 50 ist eine Mehrzahl von im Wesentlichen senkrecht zur Trägerscheibe 50 verlaufenden Rastarmen 52 angeordnet. Zur starren Kopplung des Käfigs 40 mit der Aktuatoreinrichtung 26 liegen die Rastarme 52 radial außen an der Mutter 30 an, wobei hakenartige Fortsätze 54 der Rastarme 52 spielfrei in hierfür vorgesehene Rastöffnungen 56 der Mutter 30 eingreifen.

Innerhalb des starr mit der Mutter 30 gekoppelten Käfigs 40 ist die Bremsbacke 12, genauer gesagt die Trägerplatte 18 der Bremsbacke 12, entlang der Längsachse B begrenzt verschieblich geführt. Zur Führung der Bremsbacke 12 ist eine Mehrzahl von Haltearmen 58 vorgesehen, welche auf einer der Bremsscheibe 16 zugewandten Oberfläche der Trägerscheibe 50 ausgebildet sind und sich im Wesentlichen senkrecht zur Trägerscheibe 50 erstrecken. Diese Haltearme 58 hintergreifen die Trägerplatte 18 der Bremsbacke 12 derart, dass die Bremsbacke 12 ein axiales Spiel s₁ entlang der Längsachse B bezüglich der Mutter 30 der Aktuatoreinrichtung 26 besitzt. Die Haltearme 58 fungieren daher zum einen als Führung für die Bremsbacke 12 und zum anderen begrenzen sie die Beweglichkeit der Bremsbacke 12 relativ zur Aktuatoreinrichtung 26 entlang der Längsachse B.

Radial innen geht die kreisringförmige Trägerscheibe 50 in eine sich von der Bremsscheibe 16 weg erstreckende, topfförmige Einbuchtung 58 über. Die Einbuchtung 58 erstreckt sich in die becherförmige Spindel 28 hinein und liegt spielfrei an einer Innenwand der Spindel 28 an. Im Grund 60 der topfförmigen Einbuchtung 58 ist eine Durchgangsöffnung 62 vorgesehen. Durch diese Durchgangsöffnung 62 erstreckt sich der kolbenartige Fortsatz 42 der Trägerplatte 18.

Der Fortsatz 42 ist mit seinem einen Ende starr mit der Trägerplatte 18 gekoppelt und trägt an seinem durch die Durchgangsöffnung 62 hindurchragenden Ende eine kreisringförmige Kontaktscheibe 46, deren Außendurchmesser größer ist als der Durchmesser der Durchtrittsöffnung 62. Die Kontaktscheibe 54 ist ausgebildet, um elektrisch mit einem Ringkontakt 48 zusammenzuwirken, welcher auf einer der Bremsscheibe 16 abgewandten Oberfläche des Grunds 60 der Einbuchtung 58 ausgebildet ist.

Die innerhalb der Einbuchtung 58 und radial außen bezüglich des Fortsatzes 42 angeordnete Schraubenfeder 44 befindet sich in vorgespanntem Zustand und stützt sich mit ihrem einen Ende an der Trägerplatte 18 und mit ihrem anderen Ende am Grund 60 der Einbuchtung 58 ab. Auf diese Weise wird die Bremsbacke 12 bezüglich des Käfigs 40, und damit auch bezüglich der starr mit dem Käfig 40 gekoppelten Mutter 30 der Aktuatoreinrichtung 26, vorgespannt. Mittels dieser Vorspannung wird die Ausgangsstellung der Bremsbacke 12 bezüglich der Aktuatoreinrichtung 26 vor einer Betätigung der Scheibenbremse 10 definiert. Gleichzeitig wird damit der Schaltzustand der Erfassungseinrichtung 38 bei nicht-betätigter Scheibenbremse 10 festgelegt. Wie sich aus Fig. 1 ergibt, kontaktiert in dieser Ausgangsstellung die Kontaktscheibe 46 den Ringkontakt 48. Der Schaltzustand der Erfassungseinrichtung 38 ist daher "geschlossen". Der Schaltzustand kann mittels elektrischer Zuleitungen 70 einem in Fig. 1 nicht dargestellten Steuer- oder Regelschaltkreis zur Kenntnis gebracht werden. Um die Erfassungseinrichtung 38 in den Schaltzustand "geöffnet" überzuführen, muss ein definierter Kontaktöffnungsweg s₂ überwunden werden. Dieser Kontaktöffnungsweg s₂ ist geringer als das axiale Spiel s₁ der Bremsbacke 12 innerhalb des Käfigs 40.

Nachfolgend wird die Funktionsweise der in Fig. 1 dargestellten Scheibenbremse 10 näher erläutert.

Wird ausgehend von der in Fig. 1 dargestellten Ausgangsstellung der Scheibenbremse 10 zur Erzeugung einer Klemmkraft der in Fig. 1 nicht dargestellte Elektromotor in Betrieb genommen, überträgt das in Fig. 1 ebenfalls nicht dargestellte Untersetzungsgewinde eine Rotationsbewegung des Elektromotors auf die Spindel 28 der Aktuatoreinrichtung 26. Die Rotationsrichtung der Spindel 28 ist zur Erzeugung einer Klemmkraft derart gewählt, dass die mit der Spindel 28 zusammenwirkende Mutter 30 in Fig. 1 nach links bewegt wird.

Von dieser translatorischen Bewegung der Mutter 30 werden auch der Käfig 40 und die Bremsbacke 12, welche von der sich am Käfig 40 abstützenden Schraubenfeder 44 in Richtung auf die Bremsscheibe 16 vorgespannt wird, erfasst. Die Bremsbacke 12 wird somit in Richtung des Pfeils A an die Bremsscheibe 16 angepresst. Aufgrund der konstruktiven Ausgestaltung der Scheibebremse 10 als Schwimmsattel-Scheibenbremse wird als Reaktion auf das Anpressen der Bremsbacke 12 an die Bremsscheibe 16 auch die gegenüberliegende Bremsbacke 14 in Richtung des Pfeils A' an die Bremsscheibe 16 angepresst. Auf diese Weise wird eine in Richtung der Pfeile A, A' wirkende Klemmkraft erzeugt.

Gemäß dem physikalischen Prinzip actio = reactio wirkt bei Erzeugung der Klemmkraft eine Reaktionskraft in entgegengesetzter Richtung auf die Bremsbacke 12 zurück. In Folge dieser Reaktionskraft wird die Bremsbacke 12 innerhalb des Käfigs 40 relativ zur Aktuatoreinrichtung 26 in Fig. 1 nach rechts verschoben und die bereits vorgespannte Schraubenfeder 44 weiter komprimiert. Im Rahmen dieser Verschiebung der Bremsbacke 12 wird das axiale Spiel s₁ allmählich aufgebraucht. Außerdem wird der starr mit der Trägerplatte 18 der Bremsbacke 12 gekoppelte Fortsatz 42 von dieser Verschiebung erfasst, so dass die an dem Fortsatz 42 befestigte Kontaktplatte 46 bezüglich des Kontaktrings 48 in Fig. 1 nach rechts verschoben wird. Sobald bei dieser Verschiebung der Kontaktplatte 46 der Kontaktöffnungsweg s₂ überschritten ist, nimmt die Erfassungseinrichtung 38 den diskreten Schaltzustand "geöffnet" an. Dieser neue Schaltzustand entspricht einer Öffnung eines die elektrischen Zuleitungen 70 umfassenden Stromkreises und kann von dem in Fig. 1 nicht dargestellten Steuer- oder Regelschaltkreis erfasst werden.

Der diskrete Schaltzustand "geöffnet" ist charakteristisch für das in Anlage Gelangen der Bremsbacken 12, 14 an die Bremsscheibe 16 und wird bei Erreichen einer vordefinierten Klemmkraftschwelle angenommen. Diese vordefinierte Klemmkraftschwelle ist durch die Eigenschaften der Schraubenfeder 44 festgelegt. Die Schraubenfeder 44 ist derart ausgelegt, dass der Kontaktöffnungsweg s₂ einem fiktiven hydraulischen Betätigungsdruck von ungefähr 2 bar bezogen auf einen Kolbendurchmesser von 57 mm entspricht. Die Klemmkraftschwelle liegt daher in der Größenordnung von 80 N. Dies bedeutet, dass bei Erreichen eines definierten Klemmkraftwerts von 80 N der charakteristische Schaltzustand "geöffnet" angenommen und von einem in Anlage Gelangen der Bremsbacken 12, 14 an die Bremsscheibe 16 ausgegangen wird.

Sobald von dem in Fig. 1 nicht dargestellten Steuer- oder Regelschaltkreis der charakteristische Schaltzustand "geöffnet" erfasst wird, setzt eine Regelung der Klemmkraft ein. Diese Regelung basiert bei dem Ausführungsbeispiel gemäß Fig. 1 nicht auf der Auswertung eines Signals eines Klemmkraftsensors, sondern auf einer Auswertung des Verdrehwinkels eines Rotors des in Fig. 1 nicht dargestellten Motors und/oder einer Stromaufnahme dieses Motors. Zusätzlich oder alternativ zu dieser Vorhergehensweise kann auch der Verdrehwinkel der Spindel 28 zu Regelungszwecken herangezogen werden.

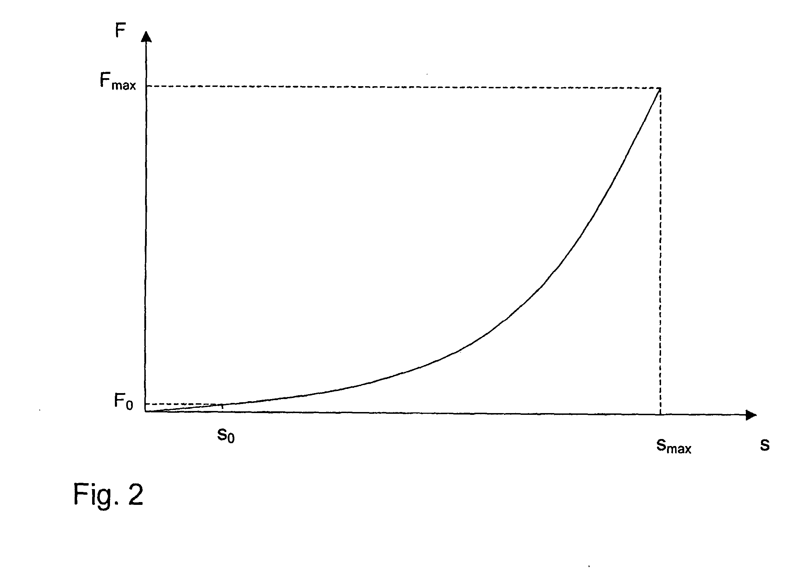

Die vorstehend beschriebene Regelung wird nachfolgend anhand der in Fig. 2 dargestellten Klemmkraftcharakteristik näher erläutert. In Fig. 2 ist der Verlauf der Klemmkraft F in Anhängigkeit von dem Zuspannweg s der Mutter 30 dargestellt. Im Ausgangszustand der Scheibenbremse 10 vor dem Einleiten eines Bremsvorgangs sollten zur Vermeidung von Reibschleif die Bremsbeläge 22, 24 einen geringen Abstand von der Bremsscheibe 16 aufweisen. Zu diesem Zweck können die Bremsbacken 12, 14 mittels des mit der Aktuatoreinrichtung 26 gekoppelten Käfigs 40 motorisch von der Bremsscheibe 16 geringfügig weggezogen werden. Bei der folgenden Betrachtung der Klemmkraftcharakteristik von Fig. 2 wird angenommen, dass im Ausgangszustand der Scheibenbremse 10 der Abstand zwischen den Bremsbelägen 22, 24 und der Bremsscheibe 16 vernachlässigbar gering ist und die Bremsbacke 12 bereits bei einem infinitesimalen Zuspannweg s innerhalb des Käfigs 40 verschoben wird.

Zu Beginn eines Bremsvorgangs (s < s₂) befindet sich die Erfassungseinrichtung 38 in dem Schaltzustand "geschlossen" und es findet noch keine Klemmkraftregelung statt. Erreicht die Klemmkraft bei einem Zuspannweg s₀ (= s₂) die definierte Klemmkraftschwelle von F₀ = 80 N, nimmt die Erfassungseinrichtung 38 den für das in Anlage Gelangen der Bremsbacken 12, 14 an die Bremsscheibe 16 charakteristischen Schaltzustand "geöffnet" an. Sobald dieser Schaltzustand der Erfassungsreinrichtung 38 von dem Steuer- oder Regelschaltkreis erfasst wird, erfolgt für einen Zuspannweg s > s₀ die bereits erläuterte Klemmkraftregelung. In Fig. 2 ist deutlich zu erkennen, dass die Klemmkraftschwelle F₀ im Vergleich zu der maximal auftretenden Klemmkraft Fₘₐₓ äußerst niedrig gewählt ist und daher tatsächlich als Indiz für das in Anlage Gelangen der Bremsbacken 12, 14 an die Bremsscheibe 16 herangezogen werden kann.

Im Rahmen der bisherigen Erörterung wurde das Erzeugen der Klemmkraft und das Erfassen des in Anlage Gelangens der Bremsbacken 12, 14 and die Bremsscheibe 16 beschrieben. Zum Abschalten oder Reduzieren der Klemmkraft wird der in Fig. 1 nicht dargestellte Elektromotor zur Betätigung der Aktuatoreinheit 26 derart angesteuert, dass die Spindel 28 ihre Rotationsrichtung ändert. In Folge der Umkehr der Rotationsrichtung wird die Mutter 30 in Fig. 1 nach rechts bewegt, wodurch sich die von den Bremsbacken 12, 14 erzeugt Klemmkraft reduziert.

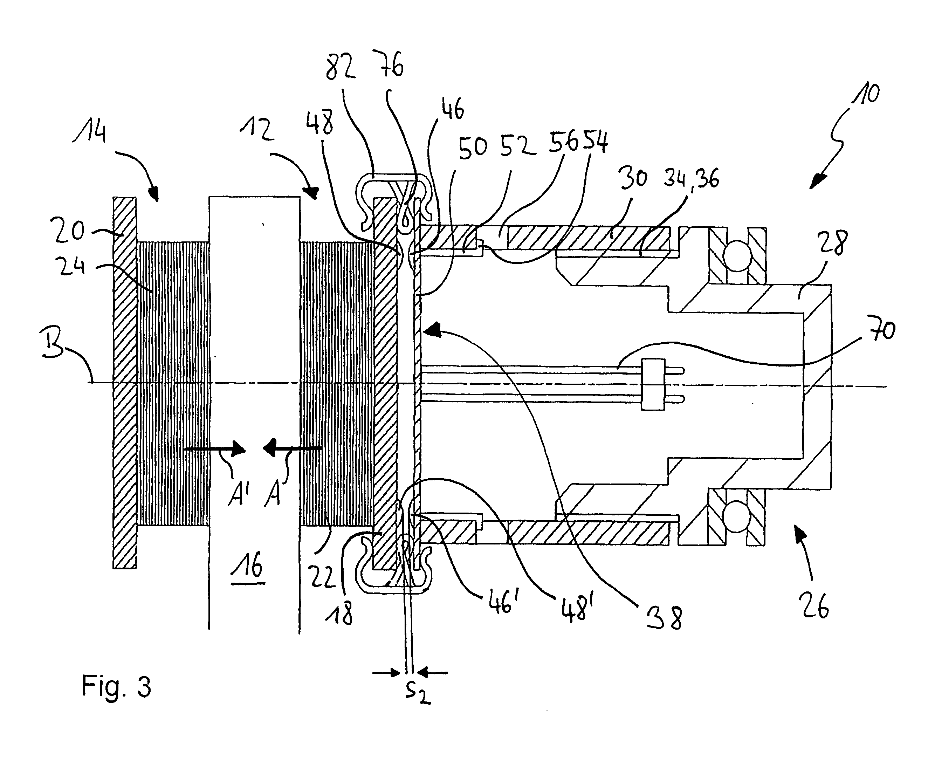

In Fig. 3 sind die maßgeblichen Komponenten einer Schwimmsattel-Scheibenbremse 10 gemäß einem zweiten Ausführungsbeispiel der Erfindung dargestellt. Die Scheibenbremse 10 gemäß dem zweiten Ausführungsbeispiel stimmt in Aufbau und Funktion teilweise mit der Schwimmsattel-Scheibenbremse gemäß dem unter Bezugnahme auf Fig. 1 erläuterten ersten Ausführungsbeispiel überein. Aus diesem Grund werden nachfolgend lediglich die konstruktiven und funktionellen Unterschiede zwischen diesen Scheibenbremsen erläutert.

Die in Fig. 3 dargestellte Scheibenbremse 10 besitzt eine als Schalteinrichtung ausgebildete Erfassungseinrichtung 38, welche eine starr mit einer translatorisch beweglichen Mutter 30 einer Aktuatoreinrichtung 26 gekoppelte Trägerscheibe 50, eine Mehrzahl von Formfedern 76 sowie zwei Kontaktpaare 46, 48, 46', 48'-umfasst. Die Trägerscheibe 50 ist auf einer der Bremsscheibe 16 zugewandten Stirnfläche der Mutter 30 angeordnet. Zur starren Kopplung der Trägerscheibe 50 mit der Mutter 30 ist auf einer der Bremsscheibe 16 abgewandten Oberfläche der Trägerscheibe 50 eine Mehrzahl von Rastarmen 52 angeordnet, welche radial innen an der Mutter 30 anliegen und in Rastöffnungen 56 der Mutter 30 spielfrei eingreifen.

Eine Mehrzahl von Klammern 82 ist über einen radial außen über die Mutter 30 überstehenden Abschnitt 84 der Trägerscheibe 50 und einen diesem Abschnitt 84 gegenüberliegenden Bereich der Trägerplatte 18 aufgesteckt und fixiert die Bremsbacke 12 relativ zur Mutter 30. Die Formfedern 76 sind jeweils einstückig mit den Klammern 82 ausgebildet und ungefähr in der Mitte zwischen den die Trägerplatte 18 und die Halterung 74 umgreifenden Armen der Klammern 82 angeordnet. Genauer gesagt sind die Formfedern 76 in einem Spalt zwischen der Trägerplatte 18 der Bremsbacke 12 und der Trägerscheibe 50 angeordnet.

Auf einer der Trägerplatte 18 der Bremsscheibe 12 zugewandten Oberfläche der Trägerscheibe 50 sind die beiden ersten Kontakte 46, 46' jedes der beiden Kontaktpaare angeordnet. Den ersten Kontakten 46, 46' jeweils gegenüberliegend sind auf einer der Trägerscheibe 50 zugewandten Oberfläche der Trägerplatte 18 die beiden zweiten Kontakte 48, 48' der beiden Kontaktpaare ausgebildet. Die beiden ersten Kontakte 46, 46' sind elektrisch als separate Kontakte ausgeführt und jeweils mit einer separaten elektrischen Zuleitung 70 gekoppelt. Die beiden zweiten Kontakte 48, 48' hingegen sind über die Trägerplatte 18 elektrisch miteinander verbunden.

Die in dem Spalt zwischen der Trägerscheibe 50 und der Trägerplatte 18 angeordneten Formfedern 76 sorgen dafür, dass im Ausgangszustand der in Fg. 3 dargestellten Scheibenbremse 10 ein gewisser Kontaktschlussweg s₂ zwischen jedem der ersten Kontakte 46, 46' und dem jeweils korrespondierenden zweiten Kontakt 48, 48' vorhanden ist. Die Erfassungseinrichtung 38 ist in dem in Fig. 3 dargestellten Ausgangsstellung der Scheibenbremse 10 daher in dem Schaltzustand "geöffnet".

Wird ausgehend von der in Fig. 1 dargestellten Ausgangsstellung der Scheibebremse 10 zur Erzeugung einer Klemmkraft die Mutter 30 in Fig. 3 nach links betätigt, überträgt sich diese translatorische Bewegung der Mutter 30 über die Formfedern 76 auf die Bremsscheibe 12 und es wird, wie bereits unter Bezugnahme auf Fig. 1 erläutert, eine Klemmkraft erzeugt. Die mit der Klemmkrafterzeugung einhergehende Reaktionskraft bewirkt eine Komprimierung der Formfedern 76 und eine Verringerung der Luftstrecke zwischen den jeweiligen Kontakten 46, 48, 46', 48' der beiden Kontaktpaare. Sobald der Kontaktschlussweg s₂ vollständig aufgebraucht ist, nimmt die Erfassungseinrichtung 38 den für das in Anlage Gelangen der Bremsbacken 12, 14 an die Bremsscheibe 16 charakteristischen, diskreten Schaltzustand "geschlossen" an und die oben beschriebene Klemmkraftregelung setzt ein.

Wie beim ersten Ausführungsbeispiel nimmt die Erfassungseinrichtung 38 den für das in Anlage Gelangen charakteristischen Schaltzustand "geschlossen" erst bei Erreichen einer vordefinierten Klemmkraftschwelle an. Diese Klemmkraftschwelle wird von den elastischen Eigenschaften der Formfedern 76 festgelegt und beträgt wie bei der Scheibenbremse gemäß dem ersten Ausführungsbeispiel ungefähr 80 N.

Die Scheibenbremse gemäß dem zweiten Ausführungsbeispiel besitzt gegenüber der Scheibenbremse gemäß dem ersten Ausführungsbeispiel einen weniger komplexen Aufbau und ist daher kostengünstiger fertigbar. Die Scheibenbremse gemäß dem ersten Ausführungsbeispiel besitzt hingegen den Vorteil, dass die im Rahmen eines Bremsvorgangs auftretenden Rückwirkkräfte nicht über die Kontakte übertragen werden und die Kontakte daher eine längere Lebensdauer besitzen.

## Patentansprüche

1. Scheibenbremse mit zwei zur Erzeugung einer Klemmkraft (A, A') beidseits an eine Bremsscheibe (16) anpressbaren Bremsbacken (12, 14), einer Aktuatoreinrichtung (26) zur Betätigung mindestens einer der Bremsbacken (12, 14) und einer Erfassungseinrichtung (38) zum Erfassen des in Anlage Gelangens mindestens einer der Bremsbacken (12, 14) an die Bremsscheibe (16), welche beim in Anlage Gelangen einen charakteristischen Zustand annimmt,
**dadurch gekennzeichnet,**
**dass** die Erfassungseinrichtung (38) ein elastisches Element (44, 76) umfasst und dass die Erfassungseinrichtung (38) den charakteristischen Zustand bei Erreichen einer durch die elastischen Eigenschaften des elastischen Elements (44, 76) definierten Kraftschwelle annimmt

2. Scheibenbremse nach Anspruch 1,
**dadurch gekennzeichnet, dass** die Kraftschwelle unterhalb von ungefähr 100 N liegt.

3. Scheibenbremse nach Anspruch 1 oder 2,
**dadurch gekennzeichnet, dass** das elastische Element (44, 76) funktionell zwischen mindestens einer der Bremsbacken (12, 14) und der Aktuatoreinrichtung (26) angeordnet ist.

4. Scheibenbremse nach einem der Ansprüche 1 bis 3,
**dadurch gekennzeichnet, dass** mindestens eine der Bremsbacken (12, 14) in einem starr mit der Aktuatoreinheit (26) gekoppelten Käfig (40) relativ zur Aktuatoreinrichtung (26) begrenzt verschieblich aufgenommen ist.

5. Scheibenbremse nach einem der Ansprüche 1 bis 4,
**dadurch gekennzeichnet, dass** die Erfassungseinrichtung als Schalteinrichtung (38) ausgebildet ist.

6. Scheibenbremse nach Anspruch 5,
**dadurch gekennzeichnet, dass** die Schalteinrichtung (38) mindestens ein Kontaktpaar mit einem ersten Kontakt (46, 46') und einem zweiten Kontakt (48, 48') umfasst, welche beim in Anlage gelangen mindestens einer der Bremsbacken (12, 14) an die Bremsscheiben (16) relativ zueinander einen charakteristischen Schaltzustand annehmen.

7. Scheibenbremse nach Anspruch 6,
**dadurch gekennzeichnet, dass** das elastische Element (44, 76) funktionell zwischen dem ersten Kontakt (46, 46') und dem zweiten Kontakt (48, 48') angeordnet ist.

8. Scheibenbremse nach Anspruch 6 oder 7,
**dadurch gekennzeichnet, dass** der erste Kontakt (46, 46') mit der Aktuatoreinheit (26) und der zweite Kontakt (48, 48') mit mindestens einer der Bremsbacken (12, 14) gekoppelt ist.

9. Verfahren zum Steuern oder Regeln einer Bremsanlage, welche eine Scheibenbremse mit zwei zur Erzeugung einer Klemmkraft (A, A') beidseits an eine Bremsscheibe (16) anpressbare Bremsbacken (12, 14) und eine Aktuatoreinrichtung (26) zur Betätigung mindestens einer der Bremsbacken (12, 14) beinhaltet, umfassend den Schritt des Erzeugens eines für Steuer- oder Regelzwecke elektrisch auswertbaren charakteristischen Zustands einer Erfassungseinrichtung (38) als Reaktion auf ein in Anlage Gelangen mindestens einer der Bremsbacken (12, 14) an die Bremsscheibe (16),
**dadurch gekennzeichnet,**
**dass** die Erfassungseinrichtung (38) ein elastisches Element (44, 76) umfasst und dass die Erfassungseinrichtung (38) den charakteristischen Zustand bei Erreichen einer durch die elastischen Eigenschaften des elastischen Elements (44, 76) definierten Kraftschwelle annimmt.

10. Verfahren nach Anspruch 9,
**dadurch gekennzeichnet, dass** nach Erfassen des charakteristischen Zustands eine Klemmkraftregelung einsetzt.

11. Verfahren nach Anspruch 10,
**dadurch gekennzeichnet, dass** die Klemmkraftregelung auf der Auswertung wenigstens eines der folgenden Parameter basiert: eines Rotorverdrehwinkels, einer Motorstromaufnahme und eines Spindelverdrehwinkels.

## Claims

1. Disc brake comprising two brake shoes (12, 14) which, for generating a clamping force (A, A'), are adapted to be pressed against both sides of a brake disc (16), an actuator device (26) for actuating at least one of the brake shoes (12, 14) and a detection device (38) for detecting the coming-into-abutment of at least one of the brake shoes (12, 14) against the brake disc (16), which during the coming-into-abutment adopts a characteristic state,
**characterized in that** the detection device (38) comprises an elastic element (44, 76) and that the detection device (38) adopts the characteristic state when a force threshold defined by the elastic properties of the elastic element (44, 76) is reached.

2. Disc brake according to claim 1,
**characterized in that** the force threshold lies below approximately 100 N.

3. Disc brake according to claim 1 or 2,
**characterized in that** the elastic element (44, 76) is disposed functionally between at least one of the brake shoes (12, 14) and the actuator device (26).

4. Disc brake according to one of claims 1 to 3,
**characterized in that** at least one of the brake shoes (12, 14) is accommodated in a cage (40), which is rigidly coupled to the actuator unit (26), so as to be displaceable to a limited extent relative to the actuator device (26).

5. Disc brake according to one of claims 1 to 4,
**characterized in that** the detection device is designed as a switching device (38).

6. Disc brake according to claim 5,
**characterized in that** the switching device (38) comprises at least one contact pair having a first contact (46, 46') and a second contact (48, 48') which upon the coming-into-abutment of at least one of the brake shoes (12, 14) against the brake discs (16) adopt a characteristic switching state relative to one another.

7. Disc brake according to claim 6,
**characterized in that** the elastic element (44, 76) is disposed functionally between the first contact (46, 46') and the second contact (48, 48').

8. Disc brake according to claim 6 or 7,
**characterized in that** the first contact (46, 46') is coupled to the actuator unit (26) and the second contact (48, 48') is coupled to at least one of the brake shoes (12, 14).

9. Method of controlling or regulating a brake system, which comprises a disc brake having two brake shoes (12, 14) which, for generating a clamping force (A, A'), are pressable against both sides of a brake disc (16), and an actuator device (26) for actuating at least one of the brake shoes (12, 14), said method comprising the step of generating a characteristic state of a detection device (38) that can be electrically evaluated for control or regulating purposes as a reaction to a coming-into-abutment of at least one of the brake shoes (12, 14) against the brake disc (16), **characterised in that** the detection device (38) comprises an elastic element (44, 76) and that the detection device (38) adopts the characteristic state when a force threshold defined by the elastic properties of the elastic element (44, 76) is reached.

10. Method according to claim 9,
**characterised in that** a clamping force control begins upon detection of the characteristic state.

11. Method according to claim 10,
**characterised in that** the clamping force control is based on the evaluation of at least one of the following parameters: a rotor angle of rotation, a motor power consumption and a spindle angle of rotation.

## Revendications

1. Frein à disque comprenant deux mâchoires (12, 14) de frein pouvant être pressées contre les deux côtés d'un disque (16) de frein afin de produire une force de serrage (A, A'), un dispositif actionneur (26) servant à actionner au moins une desdites mâchoires (12, 14) de frein et un dispositif de détection (38) qui détecte l'entrée en contact d'au moins une des mâchoires (12, 14) avec le disque (16) de frein et adopte un état caractéristique lors de cette entrée en contact,
**caractérisé en ce que** le dispositif de détection (38) comprend un élément élastique (44, 76) et **en ce que** le dispositif de détection (38) adopte l'état caractéristique lors de l'atteinte d'un seuil de force défini par les propriétés élastiques de l'élément élastique (44, 76).

2. Frein à disque selon la revendication 1,
**caractérisé en ce que** le seuil de force reste en dessous d'environ 100 N.

3. Frein à disque selon la revendication 1 ou 2,
**caractérisé en ce que** l'élément élastique (44, 76) est fonctionnellement disposé entre au moins une des mâchoires (12, 14) de frein et le dispositif actionneur (26).

4. Frein à disque selon l'une des revendications 1 à 3,
**caractérisé en ce qu'**au moins une des mâchoires (12, 14) de frein est logée dans une cage (40) accouplée rigidement au dispositif actionneur (26) à l'intérieur de laquelle ladite mâchoire peut se déplacer de manière limitée par rapport au dispositif actionneur (26).

5. Frein à disque selon l'une des revendications 1 à 4,
**caractérisé en ce que** le dispositif actionneur est conçu sous la forme d'un dispositif de commutation (38).

6. Frein à disque selon la revendication 5,
**caractérisé en ce que** le dispositif de commutation (38) comprend au moins une paire de contacts avec un premier contact (46, 46') et un deuxième contact (48, 48'), lesquels adoptent l'un par rapport à l'autre un état de commutation caractéristique lors de l'entrée en contact d'au moins une des mâchoires (12, 14) de frein avec le disque (16) de frein.

7. Frein à disque selon la revendication 6,
**caractérisé en ce que** l'élément élastique (44, 76) est fonctionnellement disposé entre le premier contact (46, 46') et le deuxième contact (48, 48').

8. Frein à disque selon la revendication 6 ou 7,
**caractérisé en ce que** le premier contact (46, 46') est couplé au dispositif actionneur (26) et le deuxième contact (48, 48') à au moins une des mâchoires (12, 14) de frein.

9. Procédé destiné à la commande ou à la régulation d'un système de freinage équipé d'un frein à disque comprenant deux mâchoires (12, 14) de frein pouvant être pressées contre les deux côtés d'un disque (16) de frein afin de produire une force de serrage (A, A') et un dispositif actionneur (26) servant à actionner au moins une desdites mâchoires (12, 14) de frein, intégrant l'étape consistant à obtenir d'un dispositif de détection (38) un état caractéristique électriquement évaluable à des fins de commande ou de régulation, en réaction à l'entrée en contact d'au moins une des mâchoires (12, 14) de frein avec le disque (16) de frein,
**caractérisé en ce que** le dispositif de détection (38) comprend un élément élastique (44, 76) et **en ce que** le dispositif de détection (38) adopte l'état caractéristique lors de l'atteinte d'un seuil de force défini par les propriétés élastiques de l'élément élastique (44, 76).

10. Frein à disque selon la revendication 9,
**caractérisé en ce que** la régulation de la force de serrage intervient après que l'état caractéristique a été détecté.

11. Frein à disque selon la revendication 10,
**caractérisé en ce que** la régulation de la force de serrage se base sur l'évaluation d'au moins un des paramètres suivants : un angle de rotation du rotor, une puissance électrique consommée par le moteur et un angle de rotation de la broche.
